# EUROPEAN PATENT SPECIFICATION

(11) **EP 4 119 014 B1**
(45) Date of publication and mention of the grant of the patent: **30.10.2024**
(21) Application number: 22184784.1
(22) Date of filing: 13.07.2022
(51) Int. Cl.: A47J 31/56, F24H 15/246

(54) **AN APPARATUS FOR HEATING AND DISPENSING WATER**
VORRICHTUNG ZUM HEIZEN UND ABGEBEN VON WASSER
APPAREIL DE CHAUFFAGE ET DE DISTRIBUTION D'EAU

(30) Priority: 15.07.2021 IT 202100018656
(43) Date of publication of application: 18.01.2023
(73) Proprietor: 3 UP S.R.L., 90141 Palermo (IT)
(72) Inventor: ZERILLI, MARCO, PALERMO (IT)
(74) Representative: Dall'Olio, Christian

(56) References cited:
- WO-A2-2005/041731
- CN-A- 107 174 127
- US-A- 4 480 173
- US-A1- 2017 027 370

## Description

The present invention relates to the sector of apparatus for heating and intermittent dispensing of water intended for human consumption. The invention is preferably applicable, though not exclusively, in the sector of boiler systems, of systems for the preparation of beverages, of systems for dispensing of potable water, of systems for preparation of foods or countertop sink and/or lower sink systems.

By water intended for human consumption is meant any water, treated or not, intended for potable use, culinary use or for the preparation of foods or beverages, regardless of the origin and of the type of use, such as for example domestic or industrial.

As is known, apparatuses for heating and intermittent dispensing of water intended for human consumption at a desired dispensing temperature can use pressure equipment. By pressure equipment is meant equipment subject to a relative pressure of greater than 0.05 MPa; the relative pressure refers to normal atmospheric pressure (0.1013 MPa). In a case where the working pressure is greater, the pipes, hydraulic valves and the receptacles are generally subjected to specific standards that discipline one or more steps of the life cycle. For example, in Europe the pressure equipment directive, or PED, from the acronym of *Pressure Equipment Directive,* is applied.

The apparatuses of the prior art have drawbacks whether they operate at atmospheric pressure, or pressure of the outside environment, or at a different pressure.

The apparatus operating at atmospheric pressure comprise a receptacle open to the outside environment, so as to maintain the water at atmospheric pressure. This configuration reduces the system complications but imposes a dispensing temperature that, if close to boiling, depends on the altitude of installation of the apparatus and is in actual terms lower than 373 K. For example, the dispensing temperature will be close to 373 K at sea level and about 370 K at an altitude of about 1000 metres. In this regard, consider that, for many beverages or foods, the preparation requires water at a temperature very close to 373 K, sometimes termed boiling or nearly boiling water. Also it is good practice for like apparatuses to operate at a temperature lower by a few Kelvin with respect to boiling temperature so as to prevent a dispersion of a flow of steam that is such as to consume a great deal of water and require continuous energy. Further, significant movement in the mass of water is generated each time heating is continued after the start of boiling.

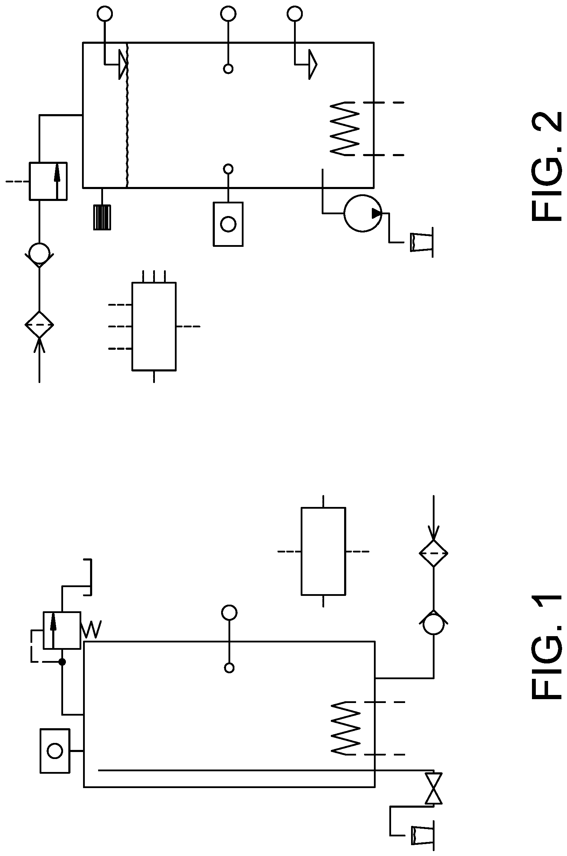

As the receptacle is not pressurised, a pump is generally used to increase the flow of water dispensed; the pump is necessary in a case where the dispensing point is at a higher level than the water in the liquid state in the receptacle. For example an apparatus operating at atmospheric pressure is shown by way of example in figure 2. The opening towards the surrounding environment is visible high on the left of the receptacle; it is good practice to include a filtering system at the opening to prevent any impurities from entering the apparatus, even when not in use or in any case switched off.

In the apparatuses that operate at a different pressure to atmospheric pressure the operating temperature can be appropriately stabilised but, as it increases, the structural characteristics of pressure equipment are becoming progressively more stringent. The safety coefficients, for good measure, amplify this effect. In addition, the pressure internally of the receptacle increases significantly during the heating of the water; for example from a pressure of 0.5 Mpa in inlet it can pass beyond 0.9 MPa. All the hydraulic components must be appropriately dimensioned and certified and can wear out quickly as they are subject to significant pressure variations. During the production of boiling water, i.e. at a dispensing temperature close to 373 K, at each heating cycle, all the hydraulic components are subjected to continuous oscillations of more than 0.5 MPa.

In a case where it is desired to dispense water at a temperature very close to 373 K, it is also preferable to heat the water to a higher temperature, typically more than 378 K, both to prevent the mixture of the water in inlet from drastically reducing the dispensing temperature and to take account of the loss during the course of the dispensing. Like apparatus do not require the use of pumps because it is the pressure of the water supply that guarantees the dispensing with flows suitable for normal uses. Further, the inlet of the outlet conduit is located in the area above the receptacle to limit the formation of areas of steam.

The initial outlet only of steam during the dispensing, the loss of water during the course of heating the water, which often requires a dedicated unloading system, and the significant pressures reached are the main drawbacks of these apparatuses. To this can be added the mixing due to the inlet of fresh water from the water supply and the consequent reduction of the dispensing temperature.

An example of an apparatus that operates at a different pressure to atmospheric pressure is given by way of example in figure 1, in which the receptacle can be seen to be connected to a water supply system and to a dispensing conduit provided with a manual valve. The reading of a temperature sensor, in the example arranged centrally, determines the switching on and off of the resistor on the bottom of the receptacle on the basis of the operating logic and/or of the dispensing temperature set. In the upper part of the receptacle a safety device can be observed, which can interrupt the electrical connection to the resistor and an overpressure valve, for safety, which prevents the operativity of the receptacle at pressures that are not permitted. Differently to figure 1, the apparatus of figure 2 requires an inlet valve to interrupt the loading of the receptacle when the water reaches the maximum level, a condition detected by a level detector illustrated at the top on the right of the receptacle.

US 4480173 A illustrates an apparatus for heating and dispensing water and, necessarily, steam comprising a pressure reducing valve in inlet which can be calibrated, for example, at 0.2 MPa. The presence of a like pressure reducing valve does not prevent the pressure increase inside the receptacle which, as illustrated in the foregoing, can exceed 0.9 MPa.

A first aim of the present invention is to obviate one or more of the drawbacks in the prior art. A second aim is to provide an apparatus which enables heating the water to a temperature of close to or higher than the boiling temperature at the pressure of the outside environment, preventing energy loss in the non-pressure apparatus and the drawbacks of pressure apparatus.

An aim of some embodiments is to limit the influence of the water in inlet on the temperature of the water being dispensed.

Preferred embodiments intend to limit the pressure variations to which the apparatus is subjected and/or to facilitate the dispensing of the water and/or to facilitate the heat exchange internally of the container so as to best exploit the heating potential.

A further aim of some embodiments is to improve the response of the apparatus on the basis of the quantity of water dispensed and/or requested.

These and other aims, which will be obvious to the expert in the sector from a reading of the following text, are attained by means of an apparatus for heating and intermittent dispensing of water intended for human consumption according to claim 1 or of a method for heating and intermittently dispensing hot water intended for human consumption according to claim 11.

In accordance with the teachings of the present document, the apparatus comprises a container, an inlet conduit internally of the container, an outlet conduit from the inside of the container for dispensing water into the outside environment and heating means of fluids internally of the container.

The container has an opening which connects the inside towards the outside environment and which is positioned above the level.

The inlet conduit is configured for connection to a water supply of water intended for human consumption, for example a household water supply, office or production premises system.

The apparatus further comprises an overpressure valve and one or more control units which control the heating means. The overpressure valve allows the flow only in outlet through the opening and when the pressure internally of the container exceeds an intervention value which is greater than the pressure of the outside environment.

The apparatus advantageously further comprises first means for regulating the flow through the inlet conduit and a level detector which detects the water in the liquid state at the level.

Further, the outlet conduit has the inlet below the level and the one or more control units also control the first means and are configured in such a way that the first means close the inlet conduit when the level detector detects the water in the liquid state at the level.

The intervention value is lower than or equal to the pressure of the water supply or the intervention value is a relative pressure, with respect to normal atmospheric pressure, positive and less than or equal to 0.05 MPa.

According to the teachings of the present description, the method comprises steps of providing an apparatus comprising a container, an inlet conduit, an outlet conduit and heating means, injecting water, heating the water and dispensing the water.

The container has a level and has an opening which connects the inside of the container towards the outside environment and which is positioned above the level.

At least in the terminal part of the step of heating the water and at least in the initial part of the step of dispensing the water, the flow is allowed through the opening only with a pressure internally of the container that is greater than an intervention value and greater than the pressure of the external environment pressure.

In the step of providing an apparatus, the outlet conduit advantageously has its inlet below the level and the apparatus comprises first means for regulating the flow through the inlet conduit and a level detector which detects the water in the liquid state at the level.

Further, in the step of injecting the water, the inlet conduit is closed when the level detector detects water in the liquid state at the level.

The intervention value is lower than or equal to the pressure of the water supply or the intervention value is a relative pressure, with respect to normal atmospheric pressure, positive and less than or equal to 0.05 MPa.

The apparatus and the method according to the invention are conceived and predisposed to dispense heated water in continuous mode, i.e. by means of successive dispensing distanced from one another over time.

The level determines the maximum quantity of water in the liquid state that is housed internally of the container.

In the apparatus of the invention it is possible to regulate the overpressure valve so as not to reach the typical pressures of the apparatus of the type in figure 1 while guaranteeing the dispensing of water that is boiling or nearly boiling. In the prior art the pressure reached is usually greater than 0.9 MPa while in the apparatus of the invention it can be regulated, for example, to 0.04 MPa with consequent benefits in terms of systems and safety, as perceived by the user.

Specific embodiments of the invention will be described in the following part of the present description, according to what is set down in the claims and with the aid of the accompanying sheets of drawings, in which:
- figure 1 and figure 2 illustrate constructional diagrams of apparatus for heating water intended for human consumption in the prior art;
- figure 3 illustrates a constructional diagram of an embodiment of an apparatus for heating water intended for human consumption according to the invention;
- figures from 4 to 7 illustrate constructional diagrams of other embodiments of an apparatus for heating and dispensing water intended for human consumption according to the invention.

With reference to the sheets of drawings, reference numeral 100 denotes a container of an apparatus for heating and dispensing of water intended for human consumption.

An embodiment of the apparatus comprises a container (100), an inlet conduit (40) to the inside of the container (100) which is configured for connection to a water supply (A) of water intended for human consumption, an outlet conduit (50) from the inside of the container (100) for dispensing water into the outside environment (E), heating means (8, 81, 82, 83) of fluids internally of the container (100), an overpressure valve (6) and one or more control units (10).

Here and in the rest of the present description, by "flow" is meant the allowing, interrupting or modulating the flow; these actions are often realised by a valve. Usually the dispensing takes place into a beaker, jug or a pan located in the outside environment (E), i.e. at the pressure thereof.

The container (100) has a level (L) and has an opening (61) which connects the inside of the container (100) towards the outside environment (E) and which is positioned above the level (L).

The container (100) is predisposed to contain internally thereof fluids at a pressure that is different to the pressure of the environment (E) outside the container (100), at least in an operating condition. In particular, the container (100) is able to maintain at least an internal pressure that is higher than atmospheric pressure.

An overpressure valve (6) which allows the flow only in outlet through the opening (61) and when the pressure internally of the container (100) exceeds an intervention value which is greater than the pressure of the outside environment (E).

The inside of the container (100) is therefore not exposed continuously to atmospheric pressure, differently to what occurs in the prior art example of figure 2.

The one or more control units (10) control the heating means (8, 81, 82, 83), so as to heat the water internally of the container (100) on the basis of the desired dispensing temperature.

The apparatus advantageously also comprises first means (4) for regulating the flow through the inlet conduit (40) and a level detector (103) which detects the water in the liquid state (W) at the level (L), i.e. when the water reaches the level.

Further, the outlet conduit (50) has the inlet below the level (L) and the one or more control units (10) also control the first means (4) and are configured in such a way that the first means (4) close the inlet conduit (40) when the level detector (103) detects water in the liquid state (W) at the level (L).

The intervention value is lower than or equal to the pressure of the water supply (A) or the intervention value is a relative pressure, with respect to normal atmospheric pressure, positive and less than or equal to 0.05 MPa.

The apparatus of the invention enables heating the water internally of the container (100) without being affected, during the heating and the maintaining of the heated water, by the effects of the value of the pressure of the outside environment (E), as occurs in non-pressure apparatus in the prior art. Further, this apparatus facilitates the dispensing of hot water, which is not preceded by an emission of steam, and prevents, or drastically reduces, loss of water from the container (100) during the heating, as occurs in the pressure apparatus of the prior art. These advantages are attained by working at a pressure that can be advantageously determined, by acting on the intervention value of the overpressure valve (6) and/or on the level (L) position, on the basis of specific applicational requirements.

In the apparatus of the type in figure 1, the pressure inside increases during the course of the loading up to being substantially equal to the pressure of the water supply (A). In the apparatus according to the invention, the quantity of water injected internally of the container (100) is, differently, defined by the level detector (103). With this detail the pressure of the water supply (A) and the pressure inside the container (100) are substantially unlinked.

By advantageously arranging the level (L), the water does not exit from the overpressure valve (6) downstream of the expansion due to the heating thereof.

The overpressure valve (6) is for example a mechanical valve such as an appropriately calibrated safety valve, which can be calibrated in production and does not require further adjustments.

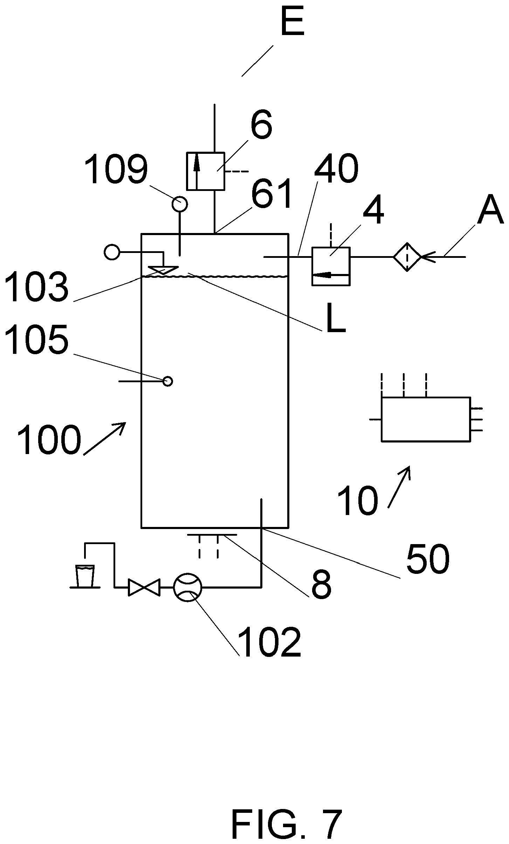

In a further realisation, the overpressure valve (6) is an electrically operated valve that is functionally connected to a sensor (109) of the pressure inside the container, as shown by way of example in figure 7. This realisation enables a rapid variation of the intervention value on the basis of the desired temperature inside the container (100) but is, generally, more expensive and subject to more frequent technical drawbacks.

Commonly, downstream of the overpressure valve (6) there are means provided for conveying the discharge, for example, a drainage pipe. In rare cases, or when there is a case of malfunctioning, these means must convey water as occurs with the apparatus of the type of figure 1.

The heating means (8, 81, 82, 83) can be, for example, heat exchangers, electrical resistances or induction heaters. Figures from 1 to 6 are represented by the electrical resistances located inside the container (100) while in figure 7 an induction heater with a conductor container (100) can be observed.

In the apparatus of the invention the heating of the water internally of the container (100) to between 374 K and about 383 K does not lead to boiling if the intervention value is a relative pressure of greater than 0.04 MPa. In fact, at the saturated steam temperature of 383 K the absolute pressure is about 0.14 MPa while at 378 K it is about 0.12 MPa. It is therefore possible to establish the intervention value on the basis of the desired temperature. The predetermined temperature for the water inside the container (1) will be equal to or greater than the dispensing temperature, in a case where account is taken of losses in outlet.

The first means can comprise one or more valves or other switch devices and preferably the first means (4) comprise an electrically operated valve, more preferably a normally-closed electrically operated valve so as to close the inlet conduit (40) towards the inside of the container (100) and prevent loading the container (100) above the level (L) in the case of an absence of electrical energy. This is useful as in the case of a long work pause: the apparatus can be kept isolated from the water supply (A) simply by detaching from the energy source. Further, the loading requires connection of the apparatus to the electricity grid.

The intervention value is preferably a relative pressure, with respect to normal atmospheric pressure, positive and less than or equal to 0.6 MPa, so as to obtain a pressure inside the container (100) that is in any case lower than the pressure in the apparatuses today available on the market which do not operate at atmospheric pressure.

The intervention value of the overpressure valve (6) is preferably lower than or equal to the pressure of the water supply (A). The apparatus will thus be subjected to pressure variations that are very narrow and coherent with those due to the connection with the water supply (A). In other words, inside the container (100) there are none of the pressure variations typical of pressure apparatus and described in the foregoing.

The pressure that develops inside the container (100) during the heating cycle is completely independent of the pressure of the water supply (A) and is not influenced thereby in any way. Instead, in the pressure apparatus of the prior art, the pressure during the heating cycle is absolutely dependent on the pressure of the water supply (A) and is always greater than it.

It will therefore not be necessary to dimension the container (100), as well as the whole apparatus, for the significant pressures typical of the pressure apparatuses of the prior art, such as the one illustrated in figure 1.

With an operating pressure greater than the normal atmospheric pressure and/or the outside environment (E) pressure and lower than or equal to the pressure of the water supply (A), normally comprised between 0.3 e 0.5 MPa, temperatures can be reached that are well above 373.15 K without boiling, thus obviating the limitations of the apparatuses that operate at atmospheric pressure.

The increase in the intervention value facilitates the thrust during the course of dispensing, even with the first means (4) completely closed, as well as the storing of thermal energy inside the container (100).

The intervention value is preferably a relative pressure, with respect to normal atmospheric pressure, positive and less than or equal to 0.05 MPa. In other words the intervention value is greater than 0 Pa, for example 0.04 MPa, i.e. the overpressure valve (6) intervenes in the case of a slight overpressure inside the container (100).

A like apparatus has the advantages of the invention but is not included in the standards of pressure apparatus, such as for example the above-mentioned PED, with important benefits in constructional, systems and certification terms for use with water intended for human consumption or for food use. In this case too the pressure that develops inside the container (100) during the heating cycle is completely independent of the pressure of the water supply (A) and is not in any way influenced.

The apparatus preferably comprises third means (5) for regulating the flow through the outlet conduit (50) and/or a sensor (102) for detecting the flow through the outlet conduit (50) and the one or more control units (10) receive the detections of the sensor (102) for detecting the flow and/or control the third means (5). Further, the one or more control units (10) are configured in such a way that, with the dispensing of water, the first means (4) close or limit the flow through the inlet conduit (40) so that the flow through the inlet conduit (40) is lower than the flow through the outlet conduit (50).

In this way the mixing and the consequent reduction of the temperature inside the container (100) due to the water inlet from the water supply (A), typically much colder than the water being dispensed, are reduced or eliminated. The apparatus thus enables dispensing of water in the liquid state (W) at the desired temperature, even when the water is close to or at 373.15 K, with a flow in outlet useful for the majority of the applications and with a temperature that is almost constant.

Further, during the course of the dispensing, the power of the heating means (8, 81, 82, 83) can be better exploited for the water already present inside the container (100).

More preferably, the one or more control units (10) are configured in such a way that the first means (4) close the inlet conduit (40) with dispensing of water in such a way as to prevent any mixing effect; the loading of the water internally of the container (100) thus starts at the end of the dispensing, sometimes after a predetermined pause.

The one or more control units (10) are preferably configured in such a way that the heating means (8, 81, 82, 83) heat at least a part of the water internally of the container (100) to a temperature above the boiling temperature of the water at the pressure of the outside environment (E). This typically means that at least one part of the water inside the container (100) is heated to a temperature of above 373.15 K, so as to enable the dispensing of the boiling water.

The apparatus of the present description ensures low overpressures inside the container (100) without any need to reduce the pressure of the water in inlet, so that it is preferable that the apparatus does not comprise any inlet pressure reducing valve, differently to US 4480173 A. The addition of a like valve increases the costs and constructional and maintenance drawbacks.

Unlike US 4480173 A, the apparatus of the present description ensures the loading of the container (100) up to the level (L) without any need for dispensing. In other words, the intervention value is preferably such as to enable the filling of the container (100) with water in the liquid state (W) up to the level (L) without the inside of the container (100) being placed in communication with the outside environment (E), other than via the overpressure valve (6). This condition is guaranteed regardless of the position of the level (L) if the intervention value of the overpressure valve (6) is lower than or equal to the pressure of the water supply (A) and, likewise, if lower than or equal to 0.05 MPa.

The apparatus preferably heats and intermittently dispenses only water intended for human consumption, i.e. it does not comprise outlets for dispensing steam to the user.

The volume of the inside of the container (100) above the level (L) is preferably predisposed so that the pressure internally of the container (100) is greater than normal atmospheric pressure and/or greater than the pressure of the outside environment (E) after the dispensing of 0.2 dm³ of heated water starting from water in the liquid state (W) at the level (L).

Though the uses of the apparatus are various, in the preparation of numerous beverages and meals, a single dispensing requires at least about 0.2 dm³ of water. The apparatus according to the invention does not exploit, or exploits only very slightly, the pressure of the water supply (A) to accelerate the dispensing of the water. With a sufficiently large volume of above the level (L), also after the water in the liquid state (W) is well below the level (L), the pressure inside the container (100) facilitates the flow in outlet. The above-described effects are reached when this last pressure is greater than the pressure of the pressure of the outside environment (E). Commonly, the apparatus is produced independently of the place of installation, for example at sea level or in a mountainous area: the pressure internally of the container (100) must indicatively be greater than normal atmospheric pressure.

More preferably, the volume of the inside of the container (100) above the level (L) is predisposed, and the apparatus is configured to operate, so that the pressure of the inside of the container (100) is greater than normal atmospheric pressure and/or greater than the pressure of the outside environment (E) after the dispensing of all the water inside the container (100) above the entry to the outlet conduit (50).

The level (L) is preferably located so that the internal volume of the container (100) below the level (L) is greater than the volume above the level (L) so as to limit the size of the apparatus with respect to the quantity of dispensable water.

The internal volume of the container (100) is preferably of a cylindrical shape, so as to be of simpler and cheaper manufacture.

Regardless of the fact that the first means (4) close or limit the inlet conduit (40), the one or more control units (10) are preferably configured in such a way that the first means (4) close or limit the flow through the inlet conduit (40) so that the water in inlet causes a reduction in the temperature of the water internally of the container (100) which is lower than a predetermined value.

Firstly, this enables guaranteeing a dispensing temperature that is much more constant and in any case within variation ranges acceptable for the user. Secondly, a controlled inlet flow enables concentrating the thermal potential of the heating means (8, 81, 82, 83) in a variable mass of water, reducing the waiting times for collecting water at the desired temperature, as it is not necessary to wait for the loading and subsequent heating of all the water requested to reach the level (L). In this regard, the overall power of the heating means (8, 81, 82, 83) is often limited for economic reasons, technical reasons and in relation to installation. In a first operating mode by way of example the first means (4) for regulating the flow close the inlet conduit (40) when the temperature variation is equal to or greater than a first threshold value and reopen the inlet conduit (40) when there has been a raising of temperature at least equal to a second threshold value.

In a further operating mode the first means (4) for regulating the flow reduce the flow rate through the inlet conduit (40) so as to maintain the temperature read by one or more temperature sensors (105, 106, 107) above a minimum value; in the case of a plurality of temperature sensors (105, 106, 107) it is preferable to satisfy the same minimum value or respective minimum values.

The container (100) preferably comprises two or more chambers (1, 2, 3) connected to one another below the level (L), the inlet conduit (40) enters a first chamber (1) and the outlet conduit (50) departs from a second chamber (2). The water being dispensed is thus less affected by the different temperature of the water in inlet.

At least the second chamber (2) and another chamber of the two or more chambers (1, 2, 3) are preferably connected to one another above the level (L) and the heating means (8, 81, 82, 83) comprise first heating means (81) of fluids internally of the second chamber (2) and second heating means (82, 83) of fluids in at least another chamber of the two or more chambers (1, 2, 3).

The connection (72) between two chambers above the level (L) facilitates the exchange between the chambers but with a reduced influence on the temperature of the water being dispensed.

The presence of one or more connections (72) above the level (L) is useful even when there is a formation of steam; this steam can transfer heat to the chamber or chambers connected to the second chamber (2).

Internally of the container (100) there can be a coexistence of an area in evaporation and an area with steam in condensation.

The presence of first heating means (81) and second heating means (82, 83) enables optimising the management of the water inside the container (100) on the basis of specific requirements. For example, the second chamber (2) can be maintained at temperature, i.e. has a predetermined temperature, that is greater than the other chambers so as to reduce losses and facilitate the heat exchange via the connections (72) above the level (L). Or, again by way of example, all of the two or more chambers (1, 2, 3) can operate at the same predetermined temperature so as to avail of a greater quantity of dispensable water at the desired temperature.

Each of the two or more chambers (1, 2, 3) is preferably associated to a respective means for heating which heats the water internally of the chamber at the predetermined temperature. The apparatus can possibly be configured to increase the temperature progressively as the water nears the second chamber (2) and therefore at the outlet conduit (50).

The one or more control units (10) are preferably configured in such a way that the first heating means (81) and the second heating means (82, 83) heat the water internally of the respective chamber of the two or more chambers (1, 2, 3) up to respective predetermined temperatures that can be different or the same as one another.

Further, the one or more control units (10) are configured in such a way that the first heating means (81) remain active once the predetermined temperature has been reached, should another chamber of the two or more chambers (1, 2, 3) not have reached the predetermined temperature. This is usually when the chamber or chambers to which the second chamber (2) is connected above the level (L) have not reached the predetermined temperature.

Owing to the connections (72) above the level (L), the power of the first heating means (81) can be advantageously exploited to accelerate the heating of the water in the other chambers of the two or more chambers (1, 2, 3).

The apparatus preferably comprises a first temperature sensor (105) in the first chamber (1) and the one or more control units (10) are configured in such a way that the first means (4) close the inlet conduit (40) in the case of a reduction in the temperature of the water internally of the first chamber (1) that is greater than a predetermined reduction. In other words it is preferable for the control of the flow in inlet to take place on the basis of the fall in temperature in the water in the first chamber (1). Possibly, the one or more control units (10) can also manage the fall in temperature in at least one other chambers of the two or more chambers (1, 2, 3).

The connections (71) between the two or more chambers (1, 2, 3) below the level (L) preferably connect, in series, one chamber with the next from the first chamber (1) to the second chamber (2). In this way the mixing between the water in inlet from the water supply (A) and the water in the second chamber (2) is further limited.

The connection (71) below the level (L) towards the second chamber (2) preferably has an area of the passage section that is greater, often at least double, than the area of the passage section of the inlet conduit (40), still with the aim of reducing the effects of the water in inlet on the dispensing temperature. More preferably, the area of the passage section is at least triple. By way of example, in the case of an apparatus for domestic use with a container (100) with a capacity of between two and six litres, the inlet conduit (40) can be made with a 6mm diameter pipe and the connection (71) below the level (L) of the second chamber (2) with an 18mm diameter pipe. Again by way of example, the connections (72) above the level (L) could be made using pipes having the same passage section as the inlet conduit (40).

The apparatus described in the present text can be advantageously used in the domestic sector, in an office or in the professional sector, as a boiler or heater for preparation of hot beverages, such as for example tea or coffee, and/or foods, such as for example pasta, vegetables or noodles.

In the case of use as a lower sink and/or a countertop sink, the outlet conduit (50) dispenses into a sink, i.e. the apparatus preferably comprises a dispenser of a sink (9) connected to the outlet conduit (50).

By way of example, the one or more control units (10) can comprise a single control unit or a first control unit dedicated to the activation of the heating means (8, 81, 82, 83) and a second control unit which controls the first means (4) and is functionally connected to the level detector (103) and, possibly, to the other elements described in the foregoing. Usually the one or more control units (10) comprises one or more electronic boards. In the appended figures of the sheets of drawings each control unit of the one or more control units (10) is schematically represented with the input of electrical energy on the left, the inlets by the detectors (103, 104) and by the flow sensors (102) or temperature sensors (105, 106, 107) or by the pressure sensors (109) above, the inlet of a safety device (101) below with, on the right, the outlets for controlling the heating means (8, 81, 82, 83), the first means (4) and, possibly, the third means (5) and/or the overpressure valve (6). The communications can be wired and/or wireless.

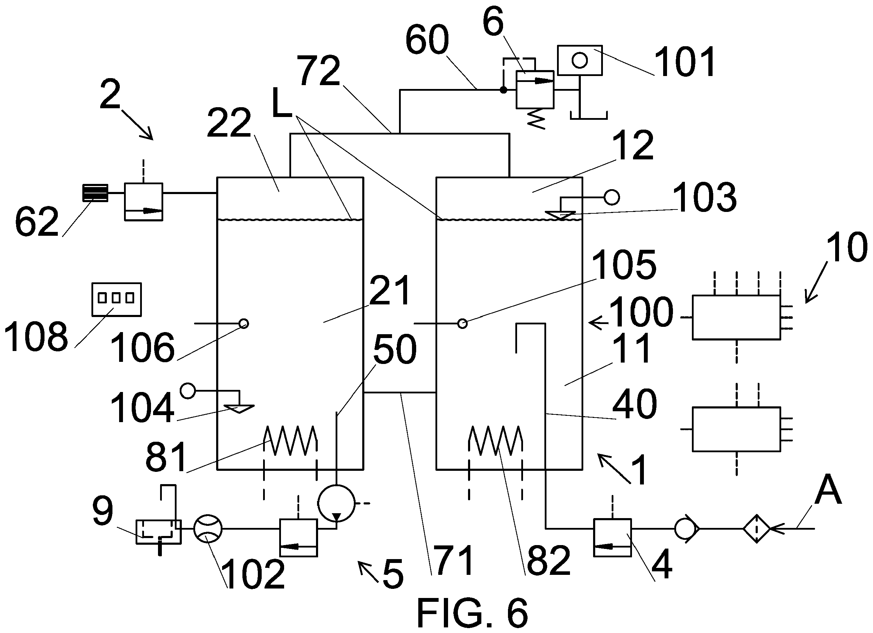

In figure 6 the dispensing is commanded via a command keyboard (108), connected to the one or more control units (10) which command the electrically operated valve and/or the pump to dispense water towards the sink (9). In the case of remote commands, the one or more control units (10) can comprise a second electronic control board dedicated to the dispensing and a first electronic control board dedicated to the control of the heating means (8, 81, 82, 83) and the first means (4) for regulating the flow.

As concerns the third means (5) for regulating the flow, various solutions are possible, for example these can comprise a valve, such as for example a manual tap or an electrically operated valve, and/or a pump. It is usually preferable for the third means (5) for regulating the flow to comprise a device controlled by the one or more control units (10), both to prevent the dispensing of water at a temperature that is different to the one desired for dispensing and for further functions, for example remote control or for information to the user.

In the event that the third means (5) comprise a pump, it is possible to vary the flow of water being dispensed on the basis of the requests to the users. For example, it is possible to increase the flow when a greater quantity of water is requested, so as to reduce the dispensing times, for example to fill a teapot or a pan.

The request for a greater quantity can be detected by a sensor (102) for detecting the flow, such as for example can occur in figure 6, or on the basis of the indications supplied by the user on the command keyboard (108) or one another device connected to the one or more control units (10). In the first case the one or more control units (10) proceed to the activation of the pump, or on increase of the flow rate thereof, after the sensor (102) for detecting the flow has detected the water passage beyond a quantity or reference time.

In the event that the sensor (102) for detecting the flow is a volumetric counter it is possible to dispense precise quantities of water at the desired temperature.

Possibly, when the third means (5) comprise a pump, the container (100) can comprise a further opening (62) towards the environment (E) outside the container (100) to bring the pressure inside the container (100) to the pressure of the outside environment (E) and thus prevent the pump from working under depression and with a strong depression. The opening of the further opening (62) is typically managed by an electrically operated valve or a shutter.

The apparatus can comprise an indicator light or another signal and/or the apparatus can obstruct the activation of the third means (5) until the water has reached a minimum temperature.

The check valve in inlet from the water supply (A) is commonly installed but is not strictly necessary and/or can be a part of the water supply (A) itself. In the appended sheets of drawings, a filter is represented between the water supply (A) and the check valve. This element too is usually incorporated into the water supply (A), but might also be a part of the apparatus.

The teachings of the invention are shown by way of example in the embodiments of figures from 3 to 7 which have numerous elements in common and which differ from one another by the number of chambers (1, 2, 3) and by the elements enabling management and control of the apparatus.

With reference to the embodiments of figures from 3 to 6, the container (100) comprises:
- two or more chambers (1, 2, 3), each comprising a first part (11, 21, 31) and a second part (12, 22, 32) that is higher than the first part (11, 21, 31);
- one or more connections (71) below the level (L) which connect each of the first parts (11, 21, 31) to at least another first part (11, 21, 31);
- one or more connections (72) above the level (L) which connect each of the second parts (12, 22, 32) to at least another second part (12, 22, 32).

The apparatus comprises an unloading conduit (60) which starts from the opening (61) made in a second part (12, 22, 32) and the overpressure valve (6) regulates the flow through the unloading conduit (60).

The apparatus is configured in such a way that the water in the liquid state (W) occupies the two or more chambers (1, 2, 3) up to a level (L) interposed between the first part (11, 21, 31) and the second part (12, 22, 32) of each chamber.

The heating means (8, 81, 82, 83) comprise first heating means (81) of fluid internally of the second chamber (2) and second heating means (82, 83) of fluids serving another chamber of the two or more chambers (1, 3). These are preferably electrical resistances arranged internally of the two or more chambers (1, 2, 3), as illustrated.

The apparatus further comprises level detectors (103, 104) and temperature sensors (105, 106, 107); the presence of a plurality of temperature sensors (105, 106, 107) enables easy management of the heating of each chamber (1, 2, 3) autonomously.

Each of the two or more chambers (1, 2, 3) preferably has an upper end (13, 23, 33) and a lower end (14, 24, 34), the second parts (12, 22, 32) extend from the upper ends (13, 23, 33) and the one or more connections (72) above the level (L) start from the upper ends (13, 23, 33).

This configuration enables minimising the presence of volumes inside the two or more chambers (1, 2, 3) which do not participate or participate in a small way in the heat exchanges and in the movements of material.

The height arrangement of the two or more chambers (1, 2, 3) must guarantee the presence of water in the liquid state (W) at the height of the one or more connections (71) below the level (L).

Preferably at least the lower ends (14, 24, 34), more preferably also the upper ends (13, 23, 33), of the two or more chambers (1, 2, 3) are at the same height, or are configured to operate at the same height, so that the level (L) of water in the liquid state (W) corresponds, for the two or more chambers (1, 2, 3) to the same height from the lower end (14, 24, 34).

The detecting of the temperature is usually done at one or more points taken as reference for the whole mass, with the consequence that boiling can anticipate the read detections. Further, the heating means (8, 81, 82, 83) can be maintained active a little longer to ensure that the desired temperature has been reached also in the areas furthest from them and from the temperature sensors (105, 106, 107).

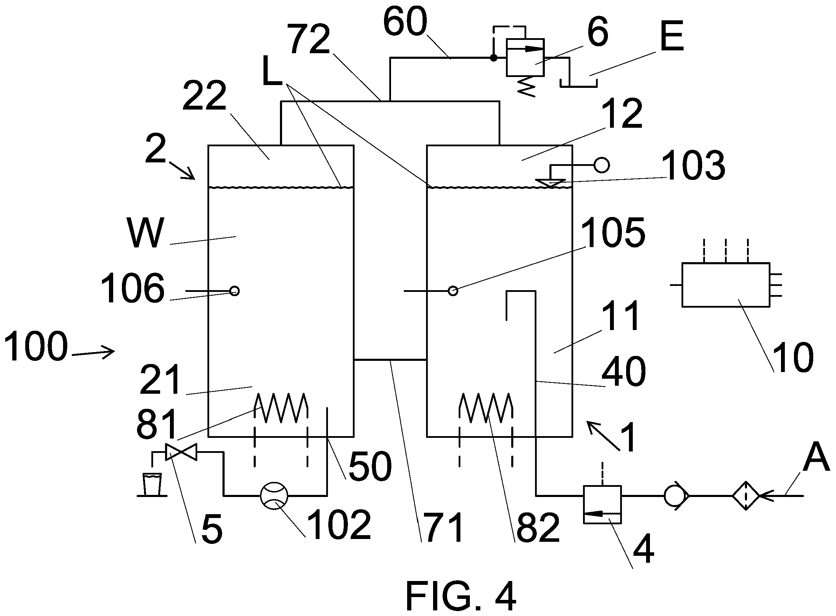

The embodiment of figure 4 comprises a first chamber (1), a second chamber (2), a level detector (103), a first temperature sensor (105), a second temperature sensor (106) and a single control unit (10). The first means (4) for regulating the flow comprise an electrically operated valve commanded by the one or more control units (10) on the basis of the level detector (103).

The water inlet into the first chamber (1) is preferably configured so as not to direct the water towards the first temperature sensor (105). For this reason the inlet conduit (40) can be spiral-shaped, can be inclined or be shaped like an umbrella handle, as illustrated.

The first heating means (81) and the second heating means (82, 83) are managed by the one or more control units (10) on the basis of temperature values detected respectively by the second temperature sensor (106) and by the first temperature sensor (105). These are preferably maintained active up to when the desired temperature has been reached, one for both chambers (1, 2) or different between the chambers (1, 2). The heating can possibly continue for a time interval following the reaching of the desired temperature.

Once the set temperature has been reached, the one or more control units (10) manage the first heating means (81) and the second heating means (82, 83) to maintain the water at the temperature. The control can be of the on-off type but preferably the control is of the Proportional - Integral - Derivative type, commonly abbreviated to PID; thus action is taken on the dispensed power so as to approach in a graded way and maintain the desired temperature.

The embodiment of figure 6 also comprises a second level detector (104), a safety device (101), a sensor (102) for detecting the flow in outlet, a command keyboard (108), a further opening (62). Further, the one or more control units (10) comprise two electronic boards and the third means (5) for regulating the flow comprise an electrically operated valve and a pump.

The safety device (101) can also be positioned on one of the upper ends (13, 23, 33) and/or the apparatus can comprise further safety devices which work in parallel to the safety device (101).

The safety device (101) is usually used to stop the functioning of the apparatus, for example by interrupting the dispensing of electrical energy, in the event of a steam flow through the unloading conduit (60) that is greater than a predetermined value. Usually this is a safety thermostat, for example of the bi-metal type which activates at a temperature of greater than 393 K.

The second level detector (104) is useful in the event that the first heating means (81) require immersion in the water to operate. In this regard, figure 6 illustrates how the outlet conduit (50) sources at a height that is greater than the first heating means (81) so as not to leave them uncovered by the water.

The water available in the second chamber (2) therefore depends on the inlet point, or sourcing point, of the outlet conduit (50).

The level detector (103 and the second level detector (104) can comprise probes connected to the one or more control units (10). By also connecting to the above a mass probe it is possible to detect the electrical conductivity via the probes and, consequently, the presence of water in the liquid state (W).

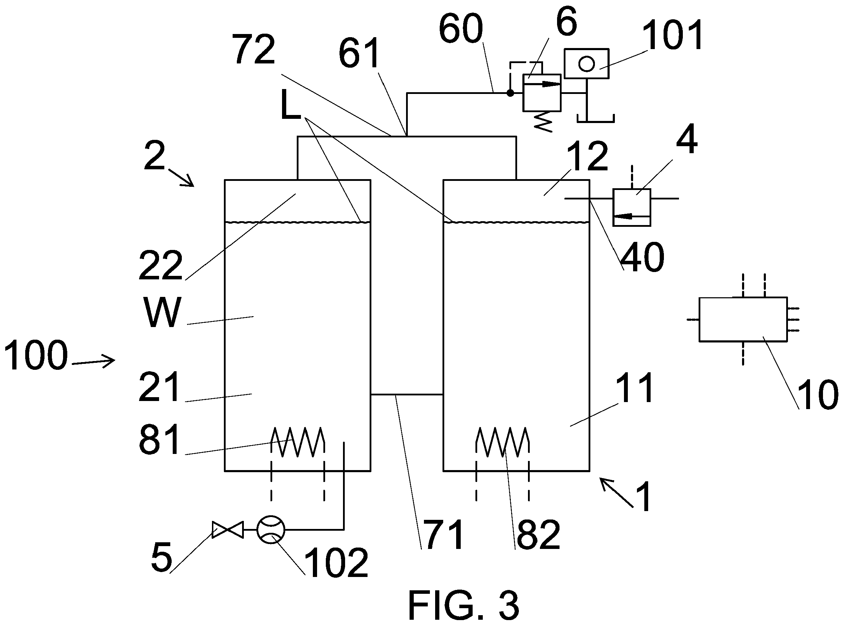

In general, should the dispensing be done by manual command, as in the cases of figures 3 and 4, the apparatus comprises a sensor (102) for detecting the flow on the outlet conduit (50) so as to enable, for example, the closing of the electrically operated valve on the inlet conduit (40). This sensor (102) for detecting the flow can be a pressure switch, a flow switch and/or a volumetric counter. Though a first dispensing of water might be detected via the level detector (103), whose primary function is to control the maximum level of water in the liquid state (W) inside the container (100), this level detector (103) does not detect a further collection if the water in the liquid state (W) is below the level (L).

The outlet conduit (50) might be connected to a dispenser or to another pipe or to another device all provided with a valve and the apparatus can be without third means (5); in these cases the external valve must be operated in such a way as to have intermittent flows in the outlet conduit (50). The same is true in the case of third means (5) having a manual valve.

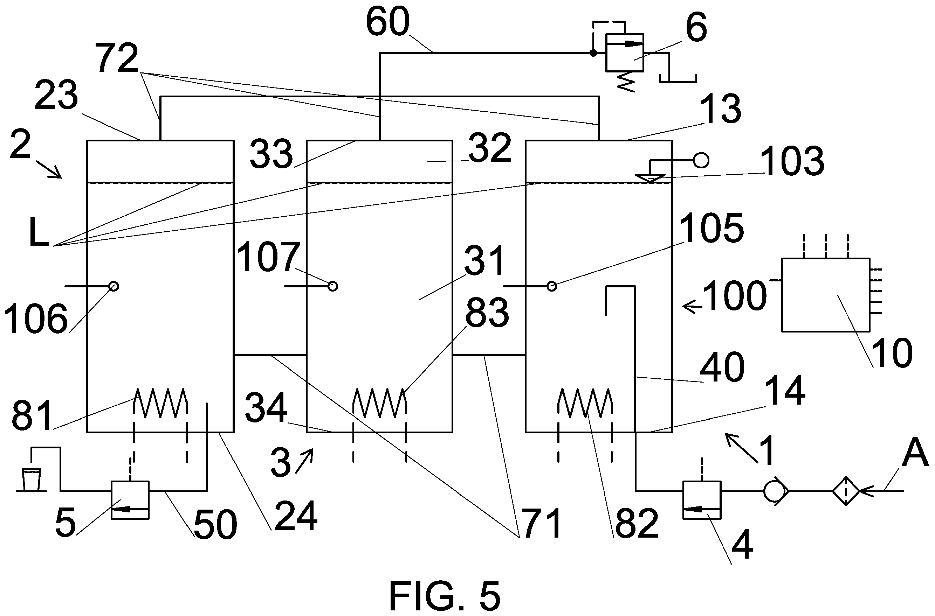

In figure 5 the third temperature sensor (107) can be observed.

The one or more connections (71) below the level (L) are preferably arranged in such a way that the water that has crossed them is directed towards the heating means (81, 82, 83) of the chamber (2, 3).

The two or more chambers (1, 2, 3) preferably have equal containment volumes.

The invention also relates to a method for heating and intermittently dispensing water intended for human consumption which, preferably, uses the apparatus described in the foregoing.

An embodiment of the method comprises steps of:
- providing an apparatus that comprises a container (100), an inlet conduit (40) to the inside of the container (100) which is configured for connection to a water supply (A) of water intended for human consumption, an outlet conduit (50) from the inside of the container (100) for dispensing water into the outside environment (E) and heating means (8, 81, 82, 83) of fluids internally of the container (100);
- injecting water into the container (100);
- heating the water internally of the container (100);
- dispensing the heated water.

The container has a level (L) and has an opening (61) which connects the inside of the container (100) towards the outside environment (E) and which is positioned above the level (L). The container is predisposed to contain internally thereof fluids at a pressure that is different to the pressure of the environment (E) outside the container (100).

At least in the terminal part of the step of heating the water and at least in the initial part of the step of dispensing the water, the flow is allowed through the opening (61) only with a pressure internally of the container (100) that is greater than an intervention value and greater than the pressure of the outside environment (E).

In the step of providing an apparatus, the outlet conduit (50) advantageously has the inlet below the level (L) and the apparatus comprises first means (4) for regulating the flow through the inlet conduit (40) and a level detector (103) which detects the water in the liquid state (W) at the level (L).

Further, in the step of injecting the water, the inlet conduit (40) is closed when the level detector (103) detects water in the liquid state (W) at the level (L).

The intervention value is lower than or equal to the pressure of the water supply (A) or the intervention value is a relative pressure, with respect to normal atmospheric pressure, positive and less than or equal to 0.05 MPa
The level detector (103) defines the maximum quantity of water in the liquid state (W) in inlet to the container (100). Thus, internally of the container (100), an area free of water is created, i.e. with air and/or steam. The level (L) is preferably located so that the internal volume of the container (100) below the level (L) is greater than the volume above the level (L) so as to limit the size of the apparatus with respect to the quantity of dispensable water.

The above-described method enables attaining the advantages described in the foregoing in terms of apparatus. The quantity of water in the liquid state (W) inside the container (100) is not affected by the pressure of the water supply, and nor is it affected by the pressure of the outside environment (E): it can therefore reach a water temperature that is equal to the tension of the saturated water steam, for example 383K at an absolute pressure of 0.14 MPa.

Other preferred characteristics of the apparatus can be derive from the foregoing. In the step of heating the water, at least a part of the water is preferably heated to a temperature above the boiling temperature of the water at the pressure of the outside environment (E).

In the step of dispensing the water, the inlet conduit (40) is preferably closed or limited so that the flow through the inlet conduit is lower than the flow through the outlet conduit. This produces a reduction in the mixing while guaranteeing a flow in outlet acceptable for the majority of uses.

In the step of injecting the water, the reduction of temperature internally of the container (100) due to the water in inlet is preferably maintained below a predetermined value. Two possible functioning logics are given by way of example in the foregoing.

In the step of heating the water, at least a part of the water is preferably heated to beyond 373.15 K with an intervention value that is higher than the boiling pressure corresponding to the maximum water temperature at the conclusion of the step of heating the water.

The intervention value is preferably lower than or equal to the pressure of the water supply (A).

The intervention value is preferably a relative pressure with respect to normal atmospheric pressure, of lower than or equal to 0.05 MPa.

As repeatedly specified, the pressure internally of the container (100) in the step of heating the water does not depend in any way on the pressure of the water supply (A) but is exclusively constrained to the intervention value, for example determined by the calibration of the overpressure valve (6).

In the step of providing an apparatus, the apparatus preferably comprises third means (5) for regulating the flow through the outlet conduit (50) and the third means (5) comprise a pump and, in the step of dispensing the water, the pump is activated if:
- the dispensing continues beyond a predetermined quantity of water or for a predetermined dispensing time; and/or
- a dispensing of a quantity of water is requested that is greater than a predetermined quantity of water.

The method thus enables exploiting the overpressure for more modest dispensing needs and the pump when the quantity of water requested grows, for example to fill a teapot.

In the step of injecting water, the heating means (8, 81,82, 83) are preferably activated only after they are covered by water; for example this condition is detected by the second level sensor (104) after the water has transited through the one or more connections (71) below the level (L).

The step of dispensing the water preferably requires the step of heating the water to be concluded, for example with the water of the second chamber (2) having reached a predetermined temperature.

The method preferably comprises further cycles of the steps of injecting water into the container (100), heating the water inside the container (100) and dispensing the heated water and the step of dispensing the water begins after the step of dispensing the heated water. The behaviour of the apparatus will be repeated in each subsequent cycle, for example the water in the liquid state (W) will be loaded always to the same level (L).

It is understood that the above has been described by way of non-limiting example and that the scope of the invention is defined by the claims.

## Claims

1. An apparatus for heating and intermittent dispensing of water intended for human consumption comprising:
- a container (100) which has a level (L) and which has an opening (61) which connects an inside of the container (100) towards the outside environment (E) and which is positioned above the level (L);
- an inlet conduit (40) to the inside of the container (100) which is configured for connection to a water supply (A) of water intended for human consumption;
- an outlet conduit (50) from the inside of the container (100) for dispensing water into the outside environment (E);
- heating means (8, 81, 82, 83) of fluids internally of the container (100);
- an overpressure valve (6) which allows the flow only in outlet through the opening (61) and when the pressure internally of the container (100) exceeds an intervention value which is greater than the pressure of the outside environment (E);
- one or more control units (10) which control the heating means (8, 81, 82, 83);
- first means (4) for regulating the flow through the inlet conduit (40) and
- a level detector (103) which detects the water in the liquid state (W) at the level (L),
wherein:
- the outlet conduit (50) has the inlet below the level (L);
- the one or more control units (10) also control the first means (4) and are configured in such a way that the first means (4) close the inlet conduit (40) when the level detector (103) detects water in the liquid state (W) at the level (L),
**characterised in that** the intervention value is lower than or equal to the pressure of the water supply (A) or the intervention value is a relative pressure, with respect to normal atmospheric pressure, positive and less than or equal to 0.05 MPa.

2. The apparatus of the preceding claim, wherein the intervention value is such as to enable filling the container (100) with water in the liquid state (W) up to the level (L) without the inside of the container (100) being placed in communication with the outside environment (E), other than via the overpressure valve (6).

3. The apparatus of any one of the preceding claims comprising third means (5) for regulating the flow through the outlet conduit (50) and/or a sensor (102) for detecting the flow through the outlet conduit (50), wherein the one or more control units (10) receive the detections of the sensor (102) for detecting the flow and/or control the third means (5) and wherein the one or more control units (10) are configured in such a way that, with the dispensing of water, the first means (4) close or limit the flow through the inlet conduit (40) so that the flow through the inlet conduit (40) is lower than the flow through the outlet conduit (50).

4. The apparatus of the preceding claim wherein the first means (4) close the inlet conduit (40) with the dispensing of water.

5. The apparatus of any one of the preceding claims wherein the one or more control units (10) are configured in such a way that the heating means (8, 81, 82, 83) heat at least a part of the water internally of the container (100) to a temperature above the boiling temperature of the water at the pressure of the outside environment (E).

6. The apparatus of any one of the preceding claims wherein the volume of the inside of the container (100) above the level (L) is predisposed so that the pressure internally of the container (100) is greater than normal atmospheric pressure and/or greater than the pressure of the outside environment (E) after the dispensing of 0.2 dm³ of water.

7. The apparatus of any one of the preceding claims wherein the one or more control units (10) are configured in such a way that the first means (4) close or limit the flow through the inlet conduit (40) so that the water in inlet causes a reduction in the temperature of the water internally of the container (100) which is less than a predetermined value.

8. The apparatus of any one of the preceding claims wherein:
- the container (100) comprises two or more chambers (1, 2, 3) connected to one another below the level (L);
- the inlet conduit (40) enters a first chamber (1);
- the outlet conduit (50) starts from a second chamber (2);
- at least the second chamber (2) and another chamber of the two or more chambers (1, 2, 3) are connected to one another above the level (L);
- the heating means (8, 81, 82, 83) comprise first heating means (81) of fluid internally of the second chamber (2) and second heating means (82, 83) of fluids in at least another chamber of the two or more chambers (1, 2, 3).

9. The apparatus of the preceding claim wherein:
- the one or more control units (10) are configured in such a way that the first heating means (81) and the second heating means (82, 83) heat the water internally of the respective chamber of the two or more chambers (1, 2, 3) up to respective predetermined temperatures;
- the one or more control units (10) are configured in such a way that the first heating means (81) remain active once the predetermined temperature has been reached, should another chamber of the two or more chambers (1, 2, 3) not have reached the predetermined temperature.

10. The apparatus of claim 10 or 11 comprising a first temperature sensor (105) in the first chamber (1) and wherein the one or more control units (10) are configured in such a way that the first means (4) close the inlet conduit (40) in the case of a reduction in the temperature of the water internally of the first chamber (1) that is greater than a predetermined reduction.

11. A method for heating and intermittently dispensing water intended for human consumption comprising steps of:
- providing an apparatus that comprises a container (100) which has a level (L) and which has an opening (61) which connects the inside of the container (100) towards the outside environment (E) and which is positioned above the level (L), an inlet conduit (40) to the inside of the container (100) which is configured for connection to a water supply (A) of water intended for human consumption, an outlet conduit (50) from the inside of the container (100) for dispensing water into the outside environment (E) and heating means (8, 81, 82, 83) of fluids internally of the container (100);
- injecting water into the container (100);
- heating the water internally of the container (100);
- dispensing the heated water;
wherein:
- at least in the terminal part of the step of heating the water and at least in the initial part of the step of dispensing the water, the flow is allowed through the opening (61) only with a pressure internally of the container (100) that is greater than an intervention value and greater than the pressure of the outside environment (E);
- in the step of providing an apparatus, the outlet conduit (50) has the inlet below the level (L) and the apparatus comprises first means (4) for regulating the flow through the inlet conduit (40) and a level detector (103) which detects the water in the liquid state (W) at the level (L);
- in the step of injecting the water, the inlet conduit (40) is closed when the level detector (103) detects water in the liquid state (W) at the level (L),
the method being **characterised in that** the intervention value is lower than or equal to the pressure of the water supply (A) or the intervention value is a relative pressure, with respect to normal atmospheric pressure, positive and less than or equal to 0.05 MPa.

12. The method of the preceding claim wherein:
- in the step of dispensing the water, the inlet conduit (40) is closed or limited so that the flow through the inlet conduit is lower than the flow through the outlet conduit;
- in the step of injecting the water, the reduction of temperature internally of the container (100) due to the water in inlet is maintained below a predetermined value;
- in the step of heating the water, at least a part of the water is heated to beyond 373.15 K.

13. The method of claim 11 or 12 wherein, in the step of providing an apparatus, the apparatus comprises third means (5) for regulating the flow through the outlet conduit (50) and the third means (5) comprise a pump and wherein, in the step of dispensing the water, the pump is activated if:
- the dispensing continues beyond a predetermined quantity of water or for a predetermined dispensing time; and/or
- a dispensing of a quantity of water is requested that is greater than a predetermined quantity of water.

## Patentansprüche

1. Vorrichtung zum Erwärmen und intermittierenden Abgeben von Wasser für den menschlichen Gebrauch, umfassend:
- einen Behälter (100), der ein Niveau (L) aufweist und der eine Öffnung (61) hat, die das Innere des Behälters (100) mit der äußeren Umgebung (E) verbindet und die oberhalb des Niveaus (L) angeordnet ist;
- eine Einlassleitung (40) in das Innere des Behälters (100), die für den Anschluss an eine Wasserversorgung (A) mit Wasser für den menschlichen Gebrauch konfiguriert ist;
- eine Auslassleitung (50) aus dem Inneren des Behälters (100) zur Abgabe von Wasser an die Außenumgebung (E);
- Heizmittel (8, 81, 82, 83) für Fluide im Inneren des Behälters (100);
- ein Überdruckventil (6), das den Durchfluss durch die Öffnung (61) nur dann zulässt, wenn der Druck im Inneren des Behälters (100) einen Eingriffswert überschreitet, der größer ist als der Druck der äußeren Umgebung (E);
- eine oder mehrere Steuereinheiten (10), die die Heizmittel (8, 81, 82,
83);
- erste Mittel (4) zur Regulierung des Durchflusses durch die Einlassleitung (40) und
- einen Niveaudetektor (103), der das Wasser im flüssigen Zustand (W) am
Pegel (L) erfasst,
wobei:
- die Auslassleitung (50) einen Einlass unterhalb des Pegels (L) hat;
- die eine oder mehreren Steuereinheiten (10) auch die ersten Mittel (4) steuern und so konfiguriert sind, dass die ersten Mittel (4) die Einlassleitung (40) schließen, wenn der Niveaudetektor (103) Wasser im flüssigen Zustand (W) auf dem Niveau (L) detektiert, **dadurch gekennzeichnet, dass** der Eingriffswert kleiner oder gleich dem Druck der Wasserversorgung (A) ist oder der Eingriffswert ein relativer Druck in Bezug auf den normalen atmosphärischen Druck ist, der positiv und kleiner oder gleich 0,05 MPa ist.

2. Die Vorrichtung nach dem vorhergehenden Anspruch, wobei der Eingriffswert so beschaffen ist, dass der Behälter (100) bis zum Füllstand (L) mit Wasser im flüssigen Zustand (W) gefüllt werden kann, ohne dass das Innere des Behälters (100) mit der äußeren Umgebung (E) in Verbindung gebracht wird, außer über das Überdruckventil (6).

3. Die Vorrichtung nach einem der vorhergehenden Ansprüche umfasst eine dritte Einrichtung (5) zur Regelung des Durchflusses durch die Auslassleitung (50) und/oder einen Sensor (102) zur Erfassung des Durchflusses durch die Auslassleitung (50), wobei die eine oder die mehreren Steuereinheiten (10) die Erfassungen des Sensors (102) zur Erfassung des Durchflusses empfangen und/oder die dritten Mittel (5) steuern und wobei die eine oder die mehreren Steuereinheiten (10) so konfiguriert sind, dass die ersten Mittel (4) bei der Abgabe von Wasser den Durchfluss durch die Einlassleitung (40) schließen oder begrenzen, so dass der Durchfluss durch die Einlassleitung (40) geringer ist als der Durchfluss durch die Auslassleitung (50).

4. Die Vorrichtung nach dem vorhergehenden Anspruch, wobei die ersten Mittel (4) die Einlassleitung (40) mit der Abgabe von Wasser schließen.

5. Die Vorrichtung nach einem der vorhergehenden Ansprüche, bei der die eine oder mehrere Steuereinheiten (10) so konfiguriert sind, dass die Heizmittel (8, 81, 82, 83) zumindest einen Teil des Wassers im Inneren des Behälters (100) auf eine Temperatur oberhalb der Siedetemperatur des Wassers bei dem Druck der äußeren Umgebung (E) erhitzen.

6. Die Vorrichtung nach einem der vorhergehenden Ansprüche, wobei das Volumen im Inneren des Behälters (100) oberhalb des Niveaus (L) so eingestellt ist, dass der Druck im Inneren des Behälters (100) größer ist als der normale atmosphärische Druck und/oder größer als der Druck der äußeren Umgebung (E) nach der Abgabe von 0,2 ^{dm3} Wasser.

7. Die Vorrichtung nach einem der vorhergehenden Ansprüche, wobei die eine oder mehreren Steuereinheiten (10) so konfiguriert sind, dass die ersten Mittel (4) den Durchfluss durch die Einlassleitung (40) schließen oder begrenzen, so dass das Wasser im Einlass eine Verringerung der Temperatur des Wassers im Inneren des Behälters (100) bewirkt, die unter einem vorgegebenen Wert liegt.

8. Die Vorrichtung nach einem der vorhergehenden Ansprüche, wobei:
- der Behälter (100) zwei oder mehr Kammern (1, 2, 3) umfasst, die unterhalb des Niveaus (L) miteinander verbunden sind;
- die Einlassleitung (40) in eine erste Kammer (1) eintritt;
- die Auslassleitung (50) von einer zweiten Kammer (2) ausgeht;
- zumindest die zweite Kammer (2) und eine weitere Kammer der zwei oder mehr Kammern (1, 2, 3) oberhalb des Niveaus (L) miteinander verbunden sind;
- die Heizmittel (8, 81, 82, 83) erste Heizmittel (81) für ein Fluid im Inneren der zweiten Kammer (2) und zweite Heizmittel (82, 83) für Fluide in mindestens einer anderen Kammer der zwei oder mehr Kammern (1, 2, 3) umfassen.

9. Die Vorrichtung nach dem vorhergehenden Anspruch, wobei:
- die eine oder die mehreren Steuereinheiten (10) so konfiguriert sind, dass die erste Heizeinrichtung (81) und die zweite Heizeinrichtung (82, 83) das Wasser im Inneren der jeweiligen Kammer der zwei oder mehr Kammern (1, 2, 3) auf jeweils vorbestimmte Temperaturen erhitzen;
- die eine oder mehreren Steuereinheiten (10) so konfiguriert sind, dass die erste Heizeinrichtung (81) aktiv bleibt, sobald die vorgegebene Temperatur erreicht ist, falls eine andere Kammer der zwei oder mehr Kammern (1, 2, 3) die vorgegebene Temperatur nicht erreicht hat.

10. Vorrichtung nach Anspruch 10 oder 11, die einen ersten Temperatursensor (105) in der ersten Kammer (1) umfasst und bei der die eine oder die mehreren Steuereinheiten (10) so konfiguriert sind, dass die ersten Mittel (4) die Einlassleitung (40) schließen, wenn die Temperatur des Wassers im Inneren der ersten Kammer (1) stärker abnimmt als eine vorgegebene Abnahme.

11. Verfahren zur Erwärmung und intermittierenden Abgabe von Wasser für den menschlichen Verzehr, das die folgenden Schritte umfasst:
- Bereitstellen einer Vorrichtung, die einen Behälter (100) mit einem Niveau (L) und einer Öffnung (61), die das Innere des Behälters (100) mit der äußeren Umgebung (E) verbindet und die oberhalb des Niveaus (L) angeordnet ist, eine Einlassleitung (40) in das Innere des Behälters (100), die zum Anschluss an eine Wasserversorgung (A) mit
Wasser für den menschlichen Verzehr, eine Auslassleitung (50) aus dem Inneren des Behälters (100) zur Abgabe von Wasser in die äußere Umgebung (E) und Heizmittel (8, 81, 82, 83) für Fluide im Inneren des Behälters (100);
- Einspritzen von Wasser in den Behälter (100);
- Erhitzen des Wassers im Inneren des Behälters (100);
- Ausgeben des erhitzten Wassers;
wobei:
- zumindest im Endteil des Schritts des Erhitzens des Wassers und zumindest im Anfangsteil des Schritts des Abgebens des Wassers der Durchfluss durch die Öffnung (61) nur bei einem Druck im Inneren des Behälters (100) zugelassen wird, der größer als ein Eingriffswert und größer als der Druck der äußeren Umgebung (E) ist;
- im Schritt des Bereitstellens einer Vorrichtung die Auslassleitung (50) den Einlass unterhalb des Niveaus (L) hat und die Vorrichtung erste Mittel (4) zum Regulieren des Flusses durch die Einlassleitung (40) und einen Niveaudetektor (103) umfasst, der das Wasser im flüssigen Zustand (W) auf dem Niveau (L) erfasst;
- in dem Schritt des Einspritzens des Wassers die Einlassleitung (40) geschlossen wird, wenn der Pegeldetektor (103) Wasser im flüssigen Zustand (W) auf dem Pegel (L) detektiert,
wobei das Verfahren **dadurch gekennzeichnet ist, dass** der Eingriffswert kleiner oder gleich dem Druck der Wasserversorgung (A) ist oder der Eingriffswert ein relativer Druck in Bezug auf den normalen atmosphärischen Druck ist, der positiv und kleiner oder gleich 0,05 MPa ist.

12. Das Verfahren nach dem vorhergehenden Anspruch, wobei:
- in dem Schritt der Abgabe des Wassers die Einlassleitung (40) geschlossen oder begrenzt wird, so dass der Durchfluss durch die Einlassleitung geringer ist als der Durchfluss durch die Auslassleitung;
- in dem Schritt des Einspritzens des Wassers die Verringerung der Temperatur im Inneren des Behälters (100) aufgrund des Wassers im Einlass unter einem vorbestimmten Wert gehalten wird;
- in dem Schritt des Erhitzens des Wassers wird zumindest ein Teil des Wassers auf über 373,15 K erhitzt.

13. Verfahren nach Anspruch 11 oder 12, wobei in dem Schritt des Bereitstellens einer Vorrichtung die Vorrichtung dritte Mittel (5) zum Regulieren des Flusses durch die Auslassleitung (50) umfasst und die dritten Mittel (5) eine Pumpe umfassen und wobei in dem Schritt des Abgebens des Wassers die Pumpe aktiviert wird, wenn:
- die Abgabe über eine vorbestimmte Wassermenge oder eine vorbestimmte Abgabezeit hinaus andauert; und/oder
- eine Ausgabe einer Wassermenge angefordert wird, die größer ist als eine vorbestimmte Wassermenge.

## Revendications

1. Un appareil pour le chauffage et la distribution intermittente d'eau destinée à la consommation humaine comprenant :
- un récipient (100) qui a un niveau (L) et qui a une ouverture (61) qui relie un intérieur du récipient (100) à l'environnement extérieur (E) et qui est positionné au-dessus du niveau (L) ;
- un conduit d'entrée (40) à l'intérieur du conteneur (100) qui est configuré pour être connecté à une source d'eau (A) destinée à la consommation humaine ;
- un conduit de sortie (50) de l'intérieur du conteneur (100) pour distribuer l'eau dans l'environnement extérieur (E) ;
- des moyens de chauffage (8, 81, 82, 83) des fluides à l'intérieur du récipient (100) ;
- une soupape de surpression (6) qui permet l'écoulement seulement en sortie à travers l'ouverture (61) et quand la pression interne du récipient (100) dépasse une valeur d'intervention qui est supérieure à la pression de l'environnement extérieur (E) ;
- une ou plusieurs unités de commande (10) qui contrôlent les moyens de chauffage (8, 81, 82, 83) ;
- des premiers moyens (4) pour réguler le flux à travers le conduit d'entrée (40) et
- un détecteur de niveau (103) qui détecte l'eau à l'état liquide (W) au niveau
niveau (L),
dans lequel :
- le conduit de sortie (50) a l'entrée en dessous du niveau (L) ;
- la ou les unités de contrôle (10) contrôlent également les premiers moyens (4) et sont configurés de telle sorte que les premiers moyens (4) ferment le conduit d'entrée (40) lorsque le détecteur de niveau (103) détecte de l'eau à l'état liquide (W) au niveau (L), **caractérisé en ce que** la valeur d'intervention est inférieure ou égale à la pression de l'alimentation en eau (A) ou la valeur d'intervention est une pression relative, par rapport à la pression atmosphérique normale, positive et inférieure ou égale à 0,05 MPa.

2. L'appareil de la revendication précédente, dans lequel la valeur d'intervention est telle qu'elle permet de remplir le récipient (100) d'eau à l'état liquide (W) jusqu'au niveau (L) sans que l'intérieur du récipient (100) ne soit mis en communication avec le milieu extérieur (E), autrement que par l'intermédiaire de la soupape de surpression (6).

3. L'appareil de l'une quelconque des revendications précédentes comprenant un troisième moyen (5) pour réguler le débit à travers le conduit de sortie (50) et/ou un capteur (102) pour détecter le débit à travers le conduit de sortie (50), dans lequel une ou plusieurs unités de contrôle (10) reçoivent les détections du capteur (102) pour détecter le débit et/ou contrôler le troisième moyen (5) et dans lequel une ou plusieurs unités de contrôle (10) sont configurées de telle sorte que, lors de la distribution de l'eau, les premiers moyens (4) ferment ou limitent le débit à travers le conduit d'entrée (40) de sorte que le débit à travers le conduit d'entrée (40) est inférieur au débit à travers le conduit de sortie (50).

4. L'appareil de la revendication précédente dans lequel les premiers moyens (4) ferment le conduit d'entrée (40) avec la distribution de l'eau.

5. L'appareil de l'une quelconque des revendications précédentes dans lequel la ou les unités de contrôle (10) sont configurées de manière à ce que les moyens de chauffage (8, 81, 82, 83) chauffent au moins une partie de l'eau à l'intérieur du récipient (100) à une température supérieure à la température d'ébullition de l'eau à la pression de l'environnement extérieur (E).

6. L'appareil de l'une quelconque des revendications précédentes dans lequel le volume de l'intérieur du récipient (100) au-dessus du niveau (L) est prédisposé pour que la pression à l'intérieur du récipient (100) soit supérieure à la pression atmosphérique normale et/ou supérieure à la pression de l'environnement extérieur (E) après la distribution de 0,2 ^{dm3} d'eau.

7. L'appareil de l'une quelconque des revendications précédentes dans lequel la ou les unités de contrôle (10) sont configurées de telle sorte que les premiers moyens (4) ferment ou limitent le flux à travers le conduit d'entrée (40) de sorte que l'eau en entrée provoque une réduction de la température de l'eau à l'intérieur du conteneur (100) qui est inférieure à une valeur prédéterminée.

8. L'appareil de l'une quelconque des revendications précédentes dans lequel :
- le récipient (100) comprend deux ou plusieurs chambres (1, 2, 3) reliées entre elles sous le niveau (L) ;
- le conduit d'entrée (40) pénètre dans une première chambre (1) ;
- le conduit de sortie (50) part d'une deuxième chambre (2) ;
- au moins la deuxième chambre (2) et une autre chambre parmi les deux chambres ou plus (1, 2, 3) sont reliées l'une à l'autre au-dessus du niveau (L) ;
- les moyens de chauffage (8, 81, 82, 83) comprennent des premiers moyens de chauffage (81) de fluide à l'intérieur de la deuxième chambre (2) et des seconds moyens de chauffage (82, 83) de fluide dans au moins une autre chambre des deux ou plusieurs chambres (1, 2, 3).

9. L'appareil de la revendication précédente dans lequel :
- la ou les unités de commande (10) sont configurées de manière à ce que le premier moyen de chauffage (81) et le second moyen de chauffage (82, 83) chauffent l'eau à l'intérieur de la chambre respective des deux chambres ou plus (1, 2, 3) jusqu'à des températures prédéterminées respectives ;
- la ou les unités de commande (10) sont configurées de telle sorte que les premiers moyens de chauffage (81) restent actifs une fois que la température prédéterminée a été atteinte, si une autre chambre des deux chambres ou plus (1, 2, 3) n'a pas atteint la température prédéterminée.

10. L'appareil de la revendication 10 ou 11 comprenant un premier capteur de température (105) dans la première chambre (1) et dans lequel la ou les unités de commande (10) sont configurées de telle sorte que les premiers moyens (4) ferment le conduit d'entrée (40) dans le cas d'une réduction de la température de l'eau à l'intérieur de la première chambre (1) qui est plus grande qu'une réduction prédéterminée.

11. Procédé de chauffage et de distribution intermittente d'eau destinée à la consommation humaine, comprenant les étapes suivantes
- fournir un appareil qui comprend un récipient (100) qui a un niveau (L) et qui a une ouverture (61) qui relie l'intérieur du récipient (100) à l'environnement extérieur (E) et qui est positionné au-dessus du niveau (L), un conduit d'entrée (40) à l'intérieur du récipient (100) qui est configuré pour la connexion à une alimentation en eau (A) de l'eau destinée à la consommation humaine, un conduit de sortie (40) à l'intérieur du récipient (100) qui est configuré pour la connexion à une alimentation en eau (A) de l'eau destinée à la consommation humaine.
d'eau destinée à la consommation humaine, un conduit de sortie (50) de l'intérieur du conteneur (100) pour distribuer l'eau dans l'environnement extérieur (E) et des moyens de chauffage (8, 81, 82, 83) des fluides à l'intérieur du conteneur (100) ;
- injecter de l'eau dans le récipient (100) ;
- chauffage de l'eau à l'intérieur du récipient (100) ;
- distribuer l'eau chauffée ;
dans lequel :
- au moins dans la partie terminale de l'étape de chauffage de l'eau et au moins dans la partie initiale de l'étape de distribution de l'eau, l'écoulement n'est autorisé à travers l'ouverture (61) qu'avec une pression interne du récipient (100) qui est supérieure à une valeur d'intervention et supérieure à la pression de l'environnement extérieur (E) ;
- dans l'étape de fourniture d'un appareil, le conduit de sortie (50) a l'entrée en dessous du niveau (L) et l'appareil comprend des premiers moyens (4) pour réguler le flux à travers le conduit d'entrée (40) et un détecteur de niveau (103) qui détecte l'eau à l'état liquide (W) au niveau (L) ;
- lors de l'étape d'injection de l'eau, le conduit d'entrée (40) est fermé lorsque le détecteur de niveau (103) détecte de l'eau à l'état liquide (W) au niveau (L),
le procédé étant **caractérisé en ce que** la valeur d'intervention est inférieure ou égale à la pression de l'alimentation en eau (A) ou la valeur d'intervention est une pression relative, par rapport à la pression atmosphérique normale, positive et inférieure ou égale à 0,05 MPa.

12. Le procédé de la revendication précédente dans lequel :
- dans l'étape de distribution de l'eau, le conduit d'entrée (40) est fermé ou limité de sorte que le débit à travers le conduit d'entrée est inférieur au débit à travers le conduit de sortie ;
- lors de l'étape d'injection de l'eau, la réduction de la température interne du récipient (100) due à l'eau en entrée est maintenue en dessous d'une valeur prédéterminée ;
- dans l'étape de chauffage de l'eau, au moins une partie de l'eau est chauffée au-delà de 373,15 K.

13. Procédé selon la revendication 11 ou 12 dans lequel, dans l'étape de fourniture d'un appareil, l'appareil comprend des troisièmes moyens (5) pour réguler le flux à travers le conduit de sortie (50) et les troisièmes moyens (5) comprennent une pompe et dans lequel, dans l'étape de distribution de l'eau, la pompe est activée si :
- la distribution se poursuit au-delà d'une quantité d'eau prédéterminée ou pendant un temps de distribution prédéterminé ; et/ou
- une quantité d'eau supérieure à une quantité d'eau prédéterminée est demandée.
